# EUROPÄISCHE PATENTSCHRIFT

(11) **EP 2 287 547 B1**
(45) Veröffentlichungstag und Bekanntmachung des Hinweises auf die Patenterteilung: **16.03.2016**
(21) Anmeldenummer: 09168179.1
(22) Anmeldetag: 19.08.2009
(51) Int. Cl.: F25B 30/06, F25B 5/02, F24D 11/02

(54) **Wärmepumpe und Verfahren zur Regelung der Quelleneintrittstemperatur an der Wärmepumpe**
Heat pump and method for regulating the source entry temperature of the heat pump
Pompe à chaleur et procédé de réglage de la température d'entrée de sources sur une pompe à chaleur

(43) Veröffentlichungstag der Anmeldung: 23.02.2011
(73) Patentinhaber: Karow, Steffen, 18057 Rostock (DE)
(72) Erfinder: Karow, Steffen, 18057 Rostock (DE)
(74) Vertreter: Gulde & Partner

(56) Entgegenhaltungen:
- EP-A2- 1 248 055
- WO-A2-2007/146050
- DE-A1- 2 161 495
- DE-A1-102005 011 700
- DE-A1-102007 048 909
- DE-U1-202008 000 374
- FR-A1- 2 380 502
- US-A- 3 782 132
- US-A- 4 065 938
- US-A- 4 364 239
- US-A1- 2007 205 298

## Beschreibung

Die Erfindung bezieht sich auf eine Wärmepumpe, die aus einem Kältemittelkreislauf, einem Wärmeverteilerkreislauf und einem Wärmequellenkreislauf mit mehr als einer Wärmequelle besteht. Die Erfindung bezieht sich weiter auf ein Verfahren zur Regelung der Quelleneingangstemperatur an einer Wärmepumpe, die mit mindestens zwei parallel angeordneten und unterschiedliche Temperaturen aufweisenden Wärmekreisläufen betrieben wird.

Wegen der Verknappung und der damit zu Ende gehenden Verfügbarkeit von fossilen Energieträgern kommt der Verwendung von regenerativen Energiearten wie Wasser-, Außenluft- und Solarwärme zu Heizzwecken eine immer größer werdende Bedeutung zu.

Da die Temperaturen dieser Energieträger zum direkten Einsatz in der Regel nicht ausreichen, kommen Wärmepumpen zum Einsatz, die das vorhandene Temperaturniveau auf das erforderliche Temperaturniveau anheben.

Wärmepumpen besitzen im Allgemeinen einen Kältemittelkreislauf, in dem sich eingangsseitig ein verdampfender Wärmetauscher und ausgangsseitig ein verflüssigender Wärmetauscher befindet. Zwischen dem verdampfenden Wärmetauscher und dem verflüssigenden Wärmetauscher ist eine antreibbare Verdichtereinheit angeordnet, die das angewärmte Kältemittel unter Druck setzt und damit auf eine höhere Temperatur bringt. In der Durchflussrichtung hinter dem verflüssigenden Wärmetauscher befindet sich ein Expansionsventil, das das unter Druck stehende und bereits abgekühlte Kältemittel wieder entspannt und damit weiter abkühlt und das das Kältemittel dann wieder dem verdampfenden Wärmetauscher zur Verfuegung stellt.

Der ausgangsseitig angeordnete und verflüssigende Wärmetauscher erwärmt einen Verbraucherkreislauf, der sich in den zu beheizenden Räumen oder in einem Wärmespeicher ausbreitet oder zu einer Entnahmestelle führt.

Der eingangsseitige und verdampfende Wärmetauscher steht im Kontakt mit einem geeigneten Energieträger, wie beispielsweise die Außenluft oder die Erde.

So gibt es direkt verdampfende Wärmepumpen, bei denen sich der verdampfende Wärmetauscher zur Erdwärmenutzung entweder im Erdreich in Form eines Kollektors, einer Sonde oder eines anders gearteten Absorbers oder in einem Grundwasserkreislauf der Erde befindet. Zur Außenluftwärmenutzung ist der verdampfende Wärmetauscher außerhalb des Gebäudes angeordnet.

Daraus ergibt sich aber jeweils ein sehr großer Kühlmittelkreislauf, der funktionell seine Grenzen hat und daher nur einen gebäudenahen Einsatz erlaubt. Ein weiterer Nachteil besteht darin, dass der gewählte Energieträger keine ausreichende Temperatur besitzt oder auf Dauer zu große Temperaturschwankungen aufweist.

Zum Ausgleich dieser Temperaturschwankungen einzelner Energieträger wurde beispielsweise in der US 2006/0288724 A1 und in der WO 96/00874 bereits vorgeschlagen, mit der Außenluft und der Erdwärme zwei Energieträger in einer Wärmepumpeneinheit zu nutzen, wobei die mit dem höheren Temperaturniveau ausgestattete Energiequelle alternativ eingesetzt wird. Die Auswahl des günstigeren Energieträgers trifft eine Steuereinheit.

Aus der DE 20 2007 013 888U1 ist auch eine Wärmepumpe bekannt, die mit Erdwärme betrieben wird und die von einer zweiten Wärmequelle unterstützt wird. Bei dieser zweiten Wärmequelle handelt es sich um Solar- oder Umweltwärme, die nicht alternativ genutzt, sondern in den Erdwärmekreislauf eingespeist wird. Damit wird die Quelleneingangstemperatur an der Wärmepumpe angehoben.

Aus DE 10 2007 048 909 A1 ist eine Wärmepumpenanordnung mit einem Kältemittelkreislauf, einem Wärmeverteilerkreislauf und einem Wärmequellenkreislauf mit mehr als einer Wärmequelle bekannt, wobei der Kältemittelkreislauf mindestens zwei verdampfende Wärmetauscher besitzt. Die beiden Kreislaufzweige, denen jeweils Wärme aus einer Wärmequelle zuführbar sind, sind parallel zueinander angeordnet und alternativ zuschaltbar oder abriegelbar. Im Wärmepumpenbetrieb wird über ein Dreiwegeventil stets nur ein Verdampfer vom Kältemittel durchströmt und dadurch auch nur einer Wärmequelle Wärme entzogen.

Es hat sich aber bei allen mit mehreren Wärmequellen betriebenen Wärmepumpen gezeigt, dass weder mit der Auswahl einer von zwei Wärmequellen noch mit der Summierung mehrerer Wärmequellen ein ausreichend ausgeglichenes Wärmeangebot für die Wärmepumpe angeboten werden kann, sodass es zwischen dem verdampfenden Wärmetauscher und dem verflüssigenden Wärmetauscher weiterhin zu großen und schwankenden Temperaturunterschieden kommt, die einen erhöhten Aufwand zur Verdichtung des Kühlmittels erfordert. Das verschlechtert aber den Wirkungsgrad der direkt verdampfenden Wärmepumpe.

Der Erfindung liegt daher die Aufgabe zu Grunde, eine gattungsgemäße Wärmepumpe derart auszubilden und so anzuwenden, dass die Temperaturdifferenzen über die Verdichtereinheit der Wärmepumpe gering und weitestgehend ohne Schwankungen gehalten werden können.

Diese Aufgabe wird vorrichtungsseitig dadurch gelöst, dass der Kältemittelkreislauf mindestens zwei verdampfende Wärmetauscher besitzt, wobei jedem verdampfenden Wärmetauscher jeweils ein separates Expansionsventil zugeordnet ist und zur Regulierung der Kältemitteltemperatur vor der Verdichtereinheit mindestens eines der Expansionsventile in seiner Förderleistung regelbar ausgeführt ist.

Verfahrerisseitig wird die Aufgabe dadurch gelöst, dass mindestens zwei Wärmekreisläufe zum Zwecke des Temperaturausgleichs vor einem verdampfenden Wärmetauscher zusammengeführt und mengenmäßig vermischt werden, wobei ein Kältemittelkreislauf mindestens zwei verdampfende Wärmetauscher besitzt, wobei jedem verdampfenden Wärmetauscher jeweils ein separates Expansionsventil zugeordnet ist und zur Regulierung der Kältemitteltemperatur vor einer Verdichtereinheit mindestens eines der Expansionsventile in seiner Förderleistung geregelt wird.

Zweckdienliche Ausgestaltungsmöglichkeiten ergeben sich aus den Unteransprüchen 2 bis 13 und 15 bis 17.

Die neue Wärmepumpe und das neue Verfahren beseitigen die genannten Nachteile des Standes der Technik.

Im Kern besteht die Erfindung darin, mehrere unterschiedliche Wärmequellen zu nutzen, in dem der aus funktioneller und wirtschaftlicher Sicht günstigste Wärmequellenkreislauf ausgewählt und aktiviert wird. Dabei kann die Wärmepumpe nur mit einer Wärmequelle betrieben werden, so beispielsweise mit der Geowärme oder der Außenluftwärme, in dem diese Wärmequelle über einen verdampfenden Wärmetauscher direkt in den Kältemittelkreislauf eingebunden ist. Es ist aber von besonderem Vorteil, wenn andere und höher temperierte Wärmequellen genutzt und über einen zweiten verdampfenden Wärmetauscher zusätzlich in den direkt betriebenen Kältemittelkreislauf eingebunden werden. Das kann die im konkreten Fall nicht genutzte Erdwärme oder Außenluftwärme, aber auch die Solarwärme sein. Es ist auch möglich, mehr als eine zusätzliche Wärmequelle über den zweiten verdampfenden Wärmetauscher in den Kältemittelkreislauf einzukoppeln, wenn diese Wärmequellen unterschiedliche und gestaffelte Temperaturen aufweisen. So kann beispielsweise die bereitgestellte Temperatur einer direkt betriebenen Geowärmepumpe zunächst durch eine höher temperierte Außenluftwärme und dann durch eine geregelte Einbindung von Solarwärme auf die optimale Eingangstemperatur der Wärmepumpe angehoben werden. Dabei wird die sich aus der Regelung der Solarenergie als überflüssig erweisende Solarwärme auf direktem oder indirektem Wege für andere Zwecke genutzt.

An Stelle der am höchsten temperierten Solarenergie ist es auch denkbar, eine andere Energiequelle oder einen herkömmlichen Energieerzeuger wie beispielsweise einen Holzofen, einen Pelletkessel, einen Gaskessel oder auch eine Fernwärme einzusetzen. Die neue Wärmepumpe stellt eine Temperatur bereit, die in der Regel nahe der optimalen Eingangstemperatur an der Verdichtereinheit liegt. Diese nur noch geringe Differenz über der Verdichtereinheit erfordert nur noch eine geringe Verdichtungsleistung innerhalb des Kältemittelkreislaufes, was sich vorteilhaft auf den Wirkungsgrad der Wärmepumpe auswirkt. Dieser erhöhte Wirkungsgrad beeinflusst in besonders vorteilhafter Weise die laufenden Betriebskosten, weil Energie nur noch im geringen Maße zum Betrieb der Förderpumpen und der Verdichtereinheit benötigt wird.

Die neue Wärmepumpe zeichnet sich insbesondere auch dadurch aus, dass sie durch die Nutzung mehrerer Energiequellen die stets vorhandenen Temperaturschwankungen einzelner Energiequellen ausgleicht und dadurch eine bisher noch nicht realisierte Jahresarbeitszahl erreicht. Außerdem kann der Geowärmebereich der Wärmepumpe kleiner bemessen werden, wodurch sich die Investitionsaufwendungen minimieren.

Die Erfindung soll anhand mehrerer Ausführungsbeispiele näher erläutert werden. Dazu zeigt
- Fig. 1:: ein Schaltbild einer direkt verdampfenden Geowärmepumpe mit zwei verdampfenden Wärmetauschern,
- Fig. 2:: ein Schaltbild einer direkt verdampfenden Außenluftwärmepumpe mit zwei verdampfenden Wärmetauschern,
- Fig. 3:: ein Schaltbild einer direkt verdampfenden Außenluftwärmepumpe mit zwei verdampfenden Wärmetauschern und zwei Expansionsventilen und
- Fig. 4:: ein Schaltbild einer direkt verdampfenden Außenluftwärmepumpe nach der Fig. 3 mit einem Wärmemischer vor dem indirekt verdampfenden Wärmetauscher.

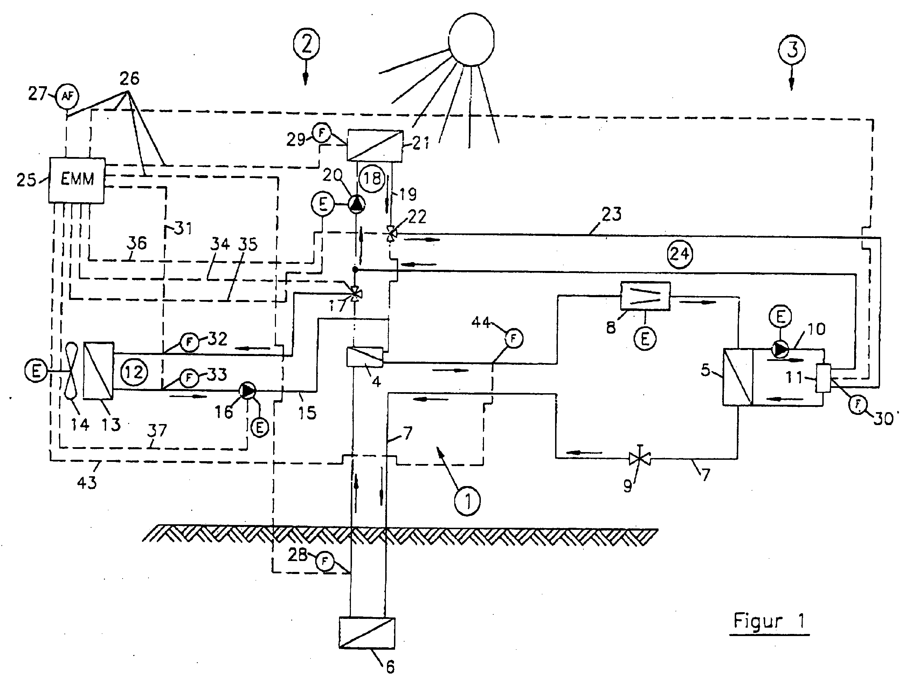

Nach der Fig. 1 besitzt die direkt verdampfende Geowärmepumpe einen Kältemittelkreislauf 1, einen Wärmequellenkreislauf 2 und einen Wärmeverteilerkreislauf 3, die alle gerätetechnisch miteinander gekoppelt sind.

Der Kältemittelkreislauf 1 besteht im Wesentlichen aus einem ersten verdampfenden Wärmetauscher 4, einem verflüssigenden Wärmetauscher 5 und einem im Erdreich eingelassenen zweiten und ebenfalls verdampfenden Geowärmetauscher 6, die alle über eine Kältemittelleitung 7 in einem geschlossenen Kreislauf eingebunden sind. In der Durchflussrichtung hinter dem ersten verdampfenden Wärmetauscher 4 befindet sich eine in der Regel elektrisch betriebene Verdichtereinheit 8 und in der gleichen Durchflussrichtung hinter dem verflüssigenden Wärmetauscher 5 ist ein Expansionsventil 9 angeordnet.

Die Temperatur abführende Seite des verflüssigenden Wärmetauschers 5 ist in den Wärmeverteilerkreislauf 3 eingebunden, der ebenfalls als ein geschlossener Kreislauf ausgeführt ist und vom verflüssigenden Wärmetauscher 5 über eine Verteilerleitung 10 zu einem Wärmeverbraucher 11 hin und zurückführt. Dabei kann der Wärmeverbraucher 11 ein Heizkörper, ein Wärmespeicher oder eine Entnahmestelle sein. Andererseits ist die Temperatur eingebende Seite des verdampfenden Wärmetauschers 4 in den Wärmequellenkreislauf 2 eingebunden. Dieser Wärmequellenkreislauf 2 wird mit einer frostsicheren Flüssigkeit betrieben und besteht zunächst aus einem Außenluftwärmekreislauf 12. Zu diesem Außenluftwärmekreislauf 12 gehört ein Luftwärmetauscher 13, der über einen vorzugsweise elektrisch angetriebenen Lüfter 14 mit einem Luftstrom versorgt wird und der in einem geschlossenen Kreislauf über eine Luftwärmeleitung 15 mit dem ersten verdampfenden Wärmetauscher 4 des Kältemittelkreislaufes 1 verbunden ist. Vor der Temperatur eingebenden Seite des ersten verdampfenden Wärmetauschers 4 ist eine in Richtung des ersten verdampfenden Wärmetauschers 4 fördernde Förderpumpe 16 eingesetzt, die von einem Elektromotor betrieben wird und die das Wasser ständig umfördert. Hinter der Temperatur eingebenden Seite des ersten verdampfenden Wärmetauschers 4 befindet sich ein schaltbares Dreiwegeventil 17, über das der Außenluftkreislauf 12 mit einem Solarwärmekreislauf 18 verbunden ist. Zu diesem Solarwärmekreislauf 18 gehört eine Solarwärmeleitung 19, die vom ersten verdampfenden Wärmetauscher 4 über das Dreiwegeventil 17 und einer Förderpumpe 20 zu einem Solarwärmetauscher 21 hin und von dort über ein weiteres Dreiwegeventil 22 zum ersten verdampfenden Wärmetauscher 4 zurückführt. In dieser Weise sind der Außenluftwärmekreislauf 12 und der Solarwärmekreislauf 18 parallel zueinander angeordnet und in der Art miteinander verbunden, dass über das Dreiwegeventil 17 bestimmt wird, ob einer der beiden Wärmekreisläufe 12, 18 oder beide mit dem ersten verdampfenden Wärmetauscher 4 verbunden sind.

Des Weiteren zweigt vom Dreiwegeventil 22 des Solarwärmekreislaufes 18 eine Überschusswärmeleitung 23 ab, die in einen geschlossenen Überschusswärmekreislauf 24 den Solarwärmekreislauf 18 direkt mit dem Wärmeverbraucher 11 des Wärmeverteilerkreislaufes 3 verbindet. Dazu mündet die Überschusswärmeleitung 23 in den Solarwärmekreislauf 18 einerseits in dem Dreiwegeventil 22 und anderseits in Durchflussrichtung vor der Förderpumpe 20. Der Solarwärmekreislauf 18 kann über einen Wärmetauscher auch indirekt mit dem Wärmeverteilerkreislauf 3 verbunden sein.

In dieser Ausführung ergeben sich mit dem Außenluftwärmekreislauf 12 und dem Solarwärmekreislauf 18 zwei indirekt verdampfende Sekundärwärmekreisläufe, die parallel zueinander angeordnet und alternativ oder gemeinsam nutzbar sind und die mit dem direkt verdampfenden Kältemittelkreislauf 1 verbindbar sind. Dabei kann der Solarwärmekreislauf 18 bei Bedarf und bei einer, die optimale Eingangstemperatur am Kältemittelkreislauf nicht übersteigenden Solarwärme entweder mit dem Kältemittelkreislauf 1 oder, im anderen Fall, mit dem Wärmeverteilerkreislauf 3 verbunden werden.

Zur Realisierung der dazu erforderlichen Schaltfunktionen ist ein Energie-Management-Modul 25 vorgesehen, das eingangsseitig über vier Leitungen 26 mit jeweils einem Au-ßenlufttemperaturfühler 27, mit einem Geotemperaturfühler 28, mit einem Solartemperaturfühler 29 und mit einem Wärmeverbrauchsfühler 30 im Wärmeverteilerkreislauf 3 verbunden ist. Das Energie-Management-Modul 25 besitzt eingangsseitig weiterhin eine Leitung 31, die zu einem Temperaturfühler 32 in der zulaufenden Luftwärmeleitung 15 und einem Temperaturfühler 33 in der zurücklaufenden Luftwärmeleitung 15 führt. Eine weitere Steuerleitung 43 verbindet den Eingang des Energie-Management-Moduls 25 mit einem Temperatur- oder Druckfühler 44, der sich im Kältemittelkreislauf 1 in Durchflussrichtung vor der Verdichtereinheit 8 befindet.

Ausgangsseitig ist das Energie-Management-Modul 25 über eine erste Steuerleitung 34 mit dem ersten Dreiwegeventil 17 in der Luftwärmeleitung 15 und über eine zweite Steuerleitung 35 mit der Förderpumpe 20 in der Solarwärmeleitung 19 verbunden. Eine dritte Steuerleitung 36 verbindet das Energie-Management-Modul 25 mit dem zweiten Dreiwegeventil 22 in der Solarwärmeleitung 19. Zur Förderpumpe 16 im Luftwärmekreislauf 12 führt eine vierte Steuerleitung 37.

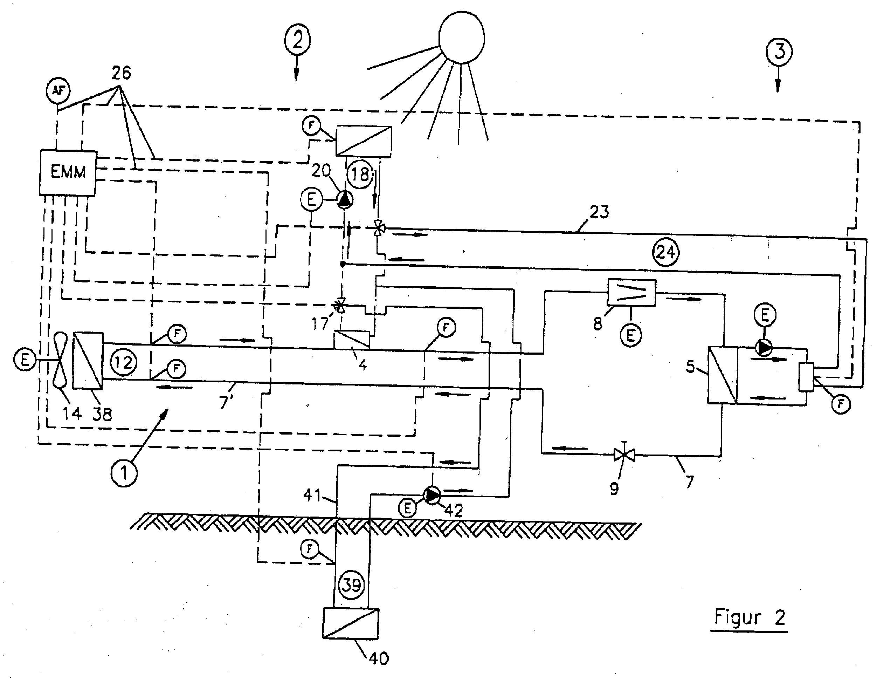

Die direkt verdampfende Luftwärmepumpe nach der Fig. 2 unterscheidet sich von der direkt verdampfenden Geowärmepumpe nach der Fig. 1 im Wesentlichen dadurch, dass an Stelle des Geowärmekreislaufes der Luftwärmekreislauf direkt in den Kältemittelkreislauf 1 eingebunden ist. Die direkt verdampfende Luftwärmepumpe nach der Fig. 2 besitzt daher ebenfalls einen Kältemittelkreislauf 1, einen Wärmequellenkreislauf 2 und einen Wärmeverteilerkreislauf 3, die alle gerätetechnisch miteinander gekoppelt sind. Der Kältemittelkreislauf 1 besteht hierzu aus dem ersten verdampfenden Wärmetauscher 4, dem verflüssigenden Wärmetauscher 5 und einem zweiten verdampfenden und im Außenbereich aufgestellten Luftwärmetauscher 38, die alle über eine Kältemittelleitung 7 in einem geschlossenen Kreislauf eingebunden sind. In der Durchflussrichtung hinter dem zweiten verdampfenden Wärmetauscher 38 befinden sich wieder die Verdichtereinheit 8 und das Expansionsventil 9. Die Temperatur abführende Seite des verflüssigenden Wärmetauschers 5 ist wieder in den Wärmeverteilerkreislauf 3 eingebunden.

Andererseits ist die Temperatur eingebende Seite des ersten verdampfenden Wärmetauschers 4 in den Wärmequellenkreislauf 2 eingebunden. Dieser Wärmequellenkreislauf 2 besteht zunächst aus dem Solarwärmekreislauf 18, so wie er auch in der Geowärmepumpe nach der Fig. 1 verwendet wird, und einem Geowärmekreislauf 39. Zu diesem Geowärmekreislauf 39 gehört ein Geowärmetauscher 40, der in einem geschlossenen Kreislauf über eine Geowärmeleitung 41 mit dem ersten verdampfenden Wärmetauscher 4 des Kältemittelkreislaufes 1 verbunden ist. Vor der Temperatur eingebenden Seite des ersten verdampfenden Wärmetauschers 4 ist eine in Richtung des ersten verdampfenden Wärmetauschers 4 fördernde Förderpumpe 42 eingesetzt. Die zurückführende Geowärmeleitung 41 mündet in das Dreiwegeventil 17 des Solarwärmekreislaufes 18.

Die direkt verdampfende Wärmepumpe wird entweder mit Geowärme gemäß der Fig. 1 oder mit Außenluftwärme betrieben, wie es die Fig. 2 zeigt. Da beide Arten der Wärmepumpe eine gleiche Funktion aufweisen, wird nachfolgend nur die Funktion der direkt verdampfenden Geowärmepumpe an Hand der Fig. 1 beschrieben.

Im Regelfall sind die beiden Förderpumpen 16, 20 des Luftwärmekreislaufes 12 und des Solarwärmekreislaufes 18 abgeschaltet, sodass die Wärmepumpe zunächst allein mit der Geowärme betrieben wird. Dazu erzeugt die Verdichtereinheit 8 einen Förderstrom innerhalb des Kältemittelkreislaufes 1. Dieser Förderstrom durchfließt den im Erdreich befindlichen zweiten verdampfenden Geowärmetauscher 6, wo er die dort vorhandene Geowärme aufnimmt und sie dann zur Verdichtereinheit 8 transportiert. Das Kältemittel wird dann in der Verdichtereinheit 8 so stark verdichtet, dass sich die Temperatur des Kältemittels auf eine nutzbare Temperatur erhöht. Im verflüssigenden Wärmetauscher 5 wird diese erhöhte Temperatur an den Wärmeverteilerkreislauf 3 abgegeben und dort an die Wärmeverbraucher 11 weitergeleitet.

Wenn die bereitstehende Geowärme nicht ausreichend ist und eine Mindesttemperatur unterschreitet, und die Außenluft und die Solarenergie gleichzeitig eine höhere Temperatur anzeigen, dann schaltet das Energie- Management-Modul 25 den höher temperierten oder wirtschaftlicheren Wärmequellenkreislauf 2 dazu, was in der Regel der Luftwärmekreislauf 12 ist. Dazu schalten sich die Förderpumpe 16 und der Lüfter 14 des Luftwärmekreislaufes 12 ein, wodurch die wärmere Außenluft über den Luftwärmetauscher 13 auf den Wasserkreislauf übertragen und zum ersten verdampfenden Wärmetauscher 4 transportiert wird. Dabei bleibt der Solarwärmekreislauf 18 durch eine entsprechende Stellung des Dreiwegeventils 17 abgesperrt. Im verdampfenden Wärmetauscher 4 wird die Außenluftwärme dann indirekt in den Kältemittelkreislauf 1 eingekoppelt.

Wenn an Stelle des Außenluftwärmekreislaufes 12 der Solarwärmekreislauf 18 genutzt wird, kann es sein, dass die Solarwärme eine Temperatur besitzt, die über die für einen Wärmepumpenbetrieb optimale Temperatur von beispielsweise 20 °C hinausgeht. Dann wird das Dreiwegeventil 22 so geschaltet, dass die überschüssige Wärme in den Überschusswärmekreislauf 23 eingespeist wird. Dabei erfolgt die Einspeisung der nutzbaren Solarwärmemenge in den ersten verdampfenden Wärmetauscher 4 über die Drehzahl der Förderpumpe 20 oder über einen Impulsbetrieb der Förderpumpe im Solarwärmekreislauf 18.

Das gemeinsame Wirken des direkt verdampfenden Geowärmekreislaufes und des indirekt verdampfenden Luftwärmekreislaufes oder des indirekt verdampfenden Solarwärmekreislaufes 18 verringert die Differenz zwischen der bereitgestellten Temperatur und der für einen wirtschaftlichen Wärmepumpenbetrieb geforderten Temperatur.

Es ist auch möglich und sinnvoll, sowohl den Außenluftwärmekreislauf 12 als auch den Solarwärmekreislauf 18 gemeinsam zu zuschalten, wenn ein weiterer Wärmebedarf besteht und die Solarwärme über das Temperaturniveau der Außenluft hinausgeht. Das geschieht durch eine entsprechende Stellung des Dreiwegeventils 17. Wenn die Solarwärme dabei eine Temperatur besitzt, die wieder über die für einen Wärmepumpenbetrieb optimale Temperatur von beispielsweise 20 °C hinausgeht, wird das Dreiwegeventil 22 so geschaltet, dass die überschüssige Wärme in den Überschusswärmekreislauf 23 eingespeist wird. Die Regelung der einzuspeisenden Solarwärmemenge in den ersten verdampfenden Wärmetauscher 4 erfolgt dann wieder über die Drehzahl der Förderpumpe 20 oder über einen Impulsbetrieb der Förderpumpe im Solarwärmekreislauf 18. Mit der Nutzung des direkt verdampfenden Geowärmekreislaufes und des indirekt verdampfenden Luftwärmekreislaufes und des indirekt verdampfenden Solarwärmekreislaufes 18 wird die für einen wirtschaftlichen Wärmepumpenbetrieb geforderte Temperatur am verdampfenden Wärmetauscher 4 in der Regel erreicht. Gleichzeitig erhöht sich der Anteil der Solarwärme, die in den Überschusswärmekreislauf 24 eingespeist wird.

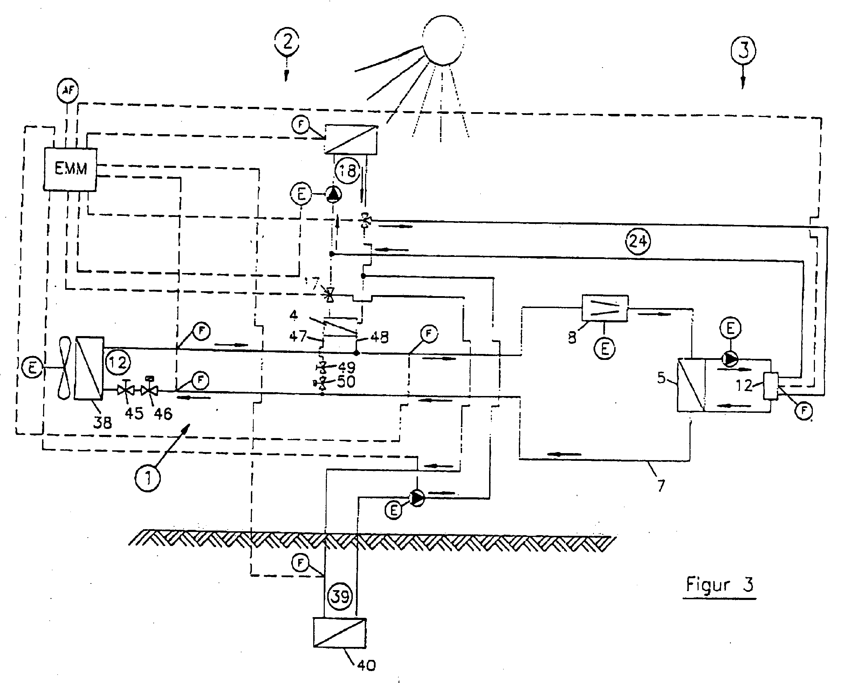

Die Wärmepumpe nach der Fig. 3 unterscheidet sich von der Wärmepumpe nach den Fig. 1 und 2 lediglich dadurch, dass innerhalb des Kältemittelkreislaufes 1 nicht mehr ein gemeinsames Expansionsventil für beide verdampfenden Wärmetauscher 4, 38 eingesetzt wird. Vielmehr befindet sich in der Kältemittelleitung 7 in Durchflussrichtung vor dem zweiten verdampfenden Wärmetauscher 38 für die eine Wärmequelle ein leistungsgeregeltes Expansionsventil 45 mit einem dazugehörenden steuerbaren Sperrventil 46. Außerdem ist der erste verdampfende Wärmetauscher 4 der beiden anderen Wärmequellenkreisläufe 18, 39 über eine Eingangsleitung 47 mit der flüssigen Seite des Kältemittelkreislaufes 1 und über eine Ausgangsleitung 48 mit der dampfenden Seite des Kältemittelkreislaufes 1 verbunden. In der Eingangsleitung 47 ist ein Expansionsventil 49 vorgesehen, das in Anlehnung an das Expansionsventil 45 vor dem verdampfenden Luftwärmetauscher 38 leistungsgeregelt ausgeführt ist. Diesem Expansionsventil 49 ist ein steuerbares Sperrventil 50 vorgeschaltet. Durch die Zuordnung eines separaten Expansionsventils 45, 49 zu jedem verdampfenden Wärmetauscher 38, 4 ist eine leistungerechte Abstimmung zwischen jedem Expansionsventil 45, 49 und dem entsprechenden verdampfenden Wärmetauscher 38, 4 möglich. Das erhöht den Wirkungsgrad der Wärmepumpe.

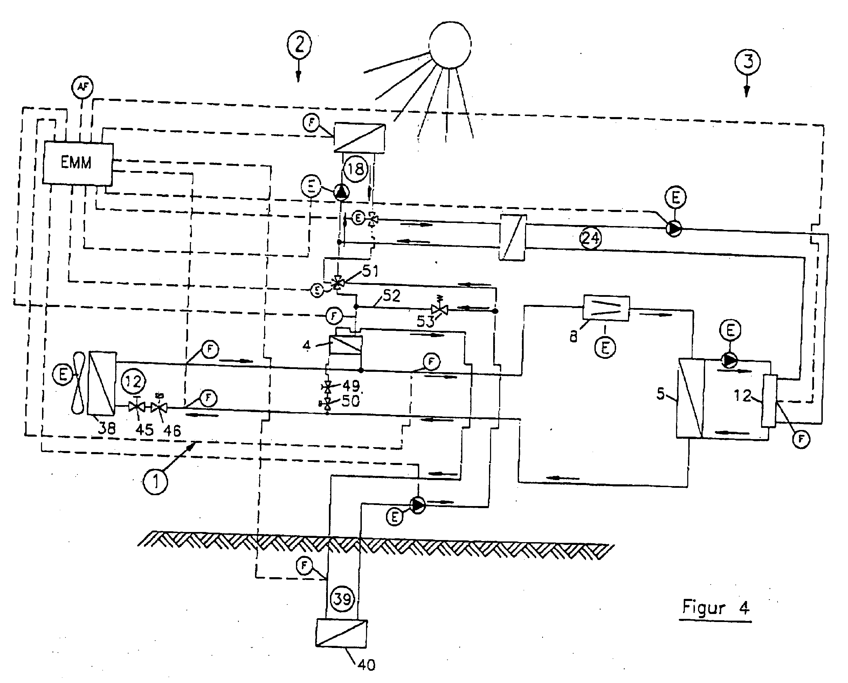

Die Wärmepumpe nach der Fig. 4 unterscheidet sich von der Wärmepumpe nach der Fig. 3 im Wesentlichen durch den Einsatz eines steuerbaren Vier-Wege-Mischers 51. Dieser steuerbare Vier-Wege-Mischer 51 befindet sich vor der Temperatur eingebenden Seite des ersten und indirekt verdampfenden Wärmetauschers 4 und verbindet den Geowärmekreislauf 39 mit dem Solarwärmekreislauf 18 oder vermischt die Volumenströme des Geowärmekreislaufs 39 und des Solarwärmekreislaufs 18 miteinander. In dieser Weise sind der Geowärmekreislauf 39 und der Solarwärmekreislauf 18 in der Art miteinander verbunden, dass über den Vier-Wege-Mischer 51 bestimmt wird, ob einer der beiden Wärmekreisläufe 39, 18 oder beide mit dem ersten verdampfenden Wärmetauscher 4 der Wärmepumpe verbunden sind.

Dazu ist der steuerbare Vier-Wege-Mischer 51 in besonderer Weise ausgebildet. In einer gesperrten Endstellung des Vier-Wege-Mischers 51 sind der Geowärmekreislauf 39 und der Solarwärmekreislauf 18 voneinander getrennt, sodass nur der Geowärmekreislauf 39 mit dem zweiten verdampfenden Wärmetauscher 4 verbunden ist, während der Solarwärmekreislauf 18 lediglich umfördert, Überschussenergie direkt zu einem weiteren Wärmeverbraucher schickt oder abgeschaltet ist.

In der anderen und geöffneten Endstellung des Vier-Wege-Mischers 51 sind der Geowärmekreislauf 39 und der Solarwärmekreislauf 18 in Reihe geschalten und so zu einem gemeinsamen Wärmekreislauf 39, 18 vereint, der dann über den Solarwärmetauscher 21 und wieder über den Vier-Wege-Mischer 51 zum ersten verdampfenden Wärmetauscher 4 führt.

In jeder Zwischenstellung schaltet der Vier-Wege-Mischer 51 den Geowärmekreislauf 39 und den Solarwärmekreislauf 18 parallel zueinander und vermischt sie zu einem, zum ersten verdampfenden Wärmetauscher 4 führenden ersten Teilstrom und zu einem, zum Solarwärmetauscher 21 führenden zweiten Teilstrom. Dabei wird eine Teilmenge des vom Geowärmetauscher 40 kommenden Flüssigkeitsstromes mit einer Teilmenge des vom Solarwärmetauscher 21 kommenden Flüssigkeitsstromes vermischt und zum ersten verdampfenden Wärmetauscher 4 geführt. Gleichzeitig vermischen sich auch die verbleibenden Teilströme des Geowärmekreislaufes 39 und des Solarwärmekreislaufes 18 und gelangen am verdampfenden Wärmetauscher 4 vorbei wieder zum Solarwärmetauscher 21. Die Vermischung der Teilmenge des kühleren Geowärmekreislaufes 39 mit der Teilmenge des wärmeren Solarwärmekreislaufes 18 ergibt eine Abkühlung des zum ersten verdampfenden Wärmetauscher 4 geführten Solarwärmekreislaufes 18. Diese Mischung wird gezielt so geregelt, dass dem ersten verdampfenden Wärmetauscher 4 gleichbleibend die optimale Quelleneintrittstemperatur von beispielsweise 20°C zur Verfügung gestellt wird.

Ist die Solarwärme so hoch, dass ein erhöhter Förderstrom des Geowärmekreislaufes 39 erforderlich wird, der vom steuerbaren Vier-Wege-Mischer 51 mengenmäßig nicht mehr bewältigt werden kann, dann öffnet ein in einer Umgehungsleitung 52 angeordnetes druckgesteuertes Überströmventil 53 und leitet eine Teilmenge des Flüssigkeitsstromes am steuerbaren Vier-Wege-Mischer 51 vorbei. Im gleichen Zuge öffnet das steuerbare Dreiwegeventil 22 im Solarwärmekreislauf 18 und speist direkt oder indirekt über einen Wärmetauscher Solarwärme in den Überschusswärmekreislauf 24 ein. Wenn die Wärmepumpe keine Wärmeanforderung hat, weil die Verdichtereinheit 8 ausgeschaltet ist, dann kann die Solarwärme aus dem Solarwärmetauscher 21 entweder zum Anheben oder zum Austausch der Temperatur des Geowärmetauschers 40 genutzt werden. Alternativ kann die Solarwärme dann auch komplett an den Überschusswärmekreislauf 24 abgegeben werden.

### Liste der Bezugszeichen

- 1: Kältemittelkreislauf
- 2: Wärmequellenkreislauf
- 3: Wärmeverteilerkreislauf
- 4: erster verdampfender Wärmetauscher
- 5: verflüssigender Wärmetauscher
- 6: zweiter verdampfender Geowärmetauscher
- 7: Kältemittelleitung
- 8: Verdichtereinheit
- 9: Expansionsventil
- 10: Verteilerleitung
- 11: Wärmeverbraucher
- 12: Außenluftwärmekreislauf
- 13: Luftwärmetauscher
- 14: Lüfter
- 15: Luftwärmeleitung
- 16: Förderpumpe
- 17: Dreiwegeventil
- 18: Solarwärmekreislauf
- 19: Solarwärmeleitung
- 20: Förderpumpe
- 21: Solarwärmetauscher
- 22: Dreiwegeventil
- 23: Überschusswärmeleitung
- 24: Überschusswärmekreislauf
- 25: Energie-Management-Modul
- 26: Leitung
- 27: Außenlufttemperaturfühler
- 28: Geotemperaturfühler
- 29: Solarwärmetemperaturfühler
- 30: Wärmeverbrauchsfühler
- 31: Leitung
- 32: Temperaturfühler
- 33: Temperaturfühler
- 34: Steuerleitung
- 35: Steuerleitung
- 36: Steuerleitung
- 37: Steuerleitung
- 38: zweiter verdampfender Luftwärmetauscher
- 39: Geowärmekreislauf
- 40: Geowärmetauscher
- 41: Geowärmeleitung
- 42: Förderpumpe
- 43: Steuerleitung
- 44: Temperatur- oder Druckfühler
- 45: erstes Expansionsventil
- 46: steuerbares Sperrventil
- 47: Eingangsleitung
- 48: Ausgangsleitung
- 49: zweites Expansionsventil
- 50: steuerbares Sperrventil
- 51: Vier-Wege-Mischer
- 52: Umgehungsleitung
- 53: druckgeregeltes Überströmventil

## Patentansprüche

1. Wärmepumpe, bestehend aus einem Kältemittelkreislauf (1), einem Wärmeverteilerkreislauf (3) und einem Wärmequellenkreislauf (2) mit mehr als einer Wärmequelle, wobei der Kältemittelkreislauf (1) mindestens zwei verdampfende Wärmetauscher (4, 6, 38) besitzt, **dadurch gekennzeichnet, dass** jedem verdampfenden Wärmetauscher (4, 6, 38) jeweils ein separates Expansionsventil (45, 49) zugeordnet ist und zur Regulierung der Kältemitteltemperatur vor der Verdichtereinheit (8) mindestens eines der Expansionsventile (45, 49) in seiner Förderleistung regelbar ausgeführt ist.

2. Wärmepumpe nach Anspruch 1,
**dadurch gekennzeichnet, dass** ein verdampfender Wärmetauscher (6, 38) eine der Wärmequellen (12, 39) direkt und der oder die anderen verdampfenden Wärmetauscher (4) die restlichen Wärmequellen (12,18, 39) indirekt mit dem Kältemittelkreislauf (1) verbindet.

3. Wärmepumpe nach Anspruch 2,
**dadurch gekennzeichnet, dass** die restlichen Wärmequellenkreisläufe (12, 18, 39) gemeinsam oder einzeln in den Kältemittelkreislauf (1) einkoppelbar sind.

4. Wärmepumpe nach Anspruch 3,
**dadurch gekennzeichnet, dass** mindestens ein restlicher Wärmequellenkreislauf (12, 18, 39) eine gegenüber der optimalen Eingangstemperatur am Kältemittelkreislauf (1) höhere Temperatur besitzt.

5. Wärmepumpe nach Anspruch 4,
**dadurch gekennzeichnet, dass** der restliche Wärmequellenkreislauf (18) mit der höchsten Temperatur ein Solarwärmekreislauf ist.

6. Wärmepumpe nach Anspruch 4,
**dadurch gekennzeichnet, dass** der restliche Wärmequellenkreislauf mit der höchsten Temperatur (18) mit einem Überschusswärmekreislauf (24) verbindbar ist, der zur Abführung überschüssiger Wärme direkt mit dem Wärmeverteilerkreislauf (3) oder mit einem externen Verbraucher verbunden ist.

7. Wärmepumpe nach Anspruch 6,
**dadurch gekennzeichnet, dass** der restliche Wärmequellenkreislauf mit der höchsten Temperatur (18) eine Förderpumpe (20) besitzt, die zur Einspeisung von Solarwärme in den Kältemittelkreislauf (1) für einen geregelten und/oder gepulsten Betrieb ausgelegt ist.

8. Wärmepumpe nach Anspruch 4,
**dadurch gekennzeichnet, dass** dem ersten verdampfenden Wärmetauscher (4) mindestens zwei Wärmekreisläufe (12, 18, 39) zugeordnet sind und vor dem ersten verdampfenden Wärmetauscher (4) sich ein steuerbarer Strömungsmischer befindet, der von den Wärmekreisläufen (12, 18, 39) durchflossen wird.

9. Wärmepumpe nach Anspruch 8,
**dadurch gekennzeichnet, dass** der steuerbare Strömungsmischer so ausgebildet ist, dass er die Wärmekreisläufe (13, 14) aneinander vorbei führt, sie in Reihe miteinander verbindet oder sie miteinander vermischt.

10. Wärmepumpe nach Anspruch 9,
**dadurch gekennzeichnet, dass** der steuerbare Strömungsmischer so ausgebildet ist, dass er in der Mischstellung die Flüssigkeitsströme der Wärmekreisläufe in jeweils zwei Teilströme aufteilt, wobei die jeweils ersten Teilströme einen neuen Flüssigkeitsstrom bilden, der zum ersten verdampfenden Wärmetauscher (4) geführt wird, und die jeweils zweiten Teilströme einen neuen Flüssigkeitsstrom bilden, die zum höher temperierten Wärmetauscher (21) zurückgeführt werden.

11. Wärmepumpe nach Anspruch 10,
**dadurch gekennzeichnet, dass** der steuerbare Strömungsmischer ein 4-Wege-Mischer (51) ist.

12. Wärmepumpe nach Anspruch 11,
**dadurch gekennzeichnet, dass** die Funktion des steuerbaren Strömungsmischers von der aktuellen Quelleneintrittstemperatur bestimmt wird, die von einem Temperaturfühler gemessen wird, der sich vor dem ersten verdampfenden Wärmetauscher (4) befindet.

13. Wärmepumpe nach Anspruch 12,
**dadurch gekennzeichnet, dass** vor dem Strömungsmischer eine Umgehungsleitung (52) vorgesehen ist, die den steuerbaren Strömungsmischer umgeht und in der sich ein druckgeregeltes Überströmventil (53) befindet.

14. Verfahren zur Regelung der Quelleneintrittstemperatur an einer Wärmepumpe, bestehend aus einem Kältemittelkreislauf (1), einem Wärmeverteilerkreislauf (3) und einem Wärmequellenkreislauf (2) mit mehr als einer Wärmequelle, die mit mindestens zwei parallel angeordneten und unterschiedliche Temperaturen aufweisenden Wärmekreisläufen (18, 39) betrieben wird,
**dadurch gekennzeichnet, dass** die mindestens zwei Wärmekreisläufe (18, 39) zum Zwecke des Temperaturausgleichs vor einem verdampfenden Wärmetauscher (4) zusammengeführt und mengenmäßig vermischt werden, und der Kältemittelkreislauf (1) mindestens zwei verdampfende Wärmetauscher (4, 6, 38) besitzt, wobei jedem verdampfenden Wärmetauscher (4, 6, 38) jeweils ein separates Expansionsventil (45, 49) zugeordnet ist und zur Regulierung der Kältemitteltemperatur vor der Verdichtereinheit (8) mindestens eines der Expansionsventile (45, 49) in seiner Förderleistung geregelt wird.

15. Verfahren nach Anspruch 14,
**dadurch gekennzeichnet, dass** jeder der Flüssigkeitsströme der mindestens zwei Wärmekreisläufe (18, 39) in zwei Teilströme aufgeteilt wird und jeder erste Teilstrom jedes Flüssigkeitsstromes zu einem ersten neuen Flüssigkeitsstrom und jeder zweite Teilstrom jedes Flüssigkeitsstromes zu einem zweiten neuen Flüssigkeitsstrom zusammen geführt werden, wobei der erste der neuen Flüssigkeitsströme durch den verdampfenden Wärmetauscher (4) geleitet wird.

16. Verfahren nach Anspruch 15,
**dadurch gekennzeichnet, dass** das Mengenverhältnis der jeweils ersten Teilströme, die zu dem ersten neuen Flüssigkeitsstrom zusammen und zum verdampfenden Wärmetauscher (4) geführt werden, von den Temperaturverhältnissen zwischen der gemessenen und der optimalen Quelleintrittstemperatur am verdampfenden Wärmetauscher (4) einerseits und den Temperaturangeboten der beiden Flüssigkeitsströme andererseits bestimmt werden.

17. Verfahren nach Anspruch 14, wobei einer der beiden Wärmekreisläufe (18, 39) ein Solarwärmekreislauf (18) ist,
**dadurch gekennzeichnet, dass** die Solarenergie ohne Zwischenspeicherung direkt in den verdampfenden Wärmetauscher (4) der Wärmepumpe eingespeist wird.

## Claims

1. A heat pump, consisting of a refrigerant circuit (1), a heat distribution circuit (3) and a heat source circuit (2) with more than one heat source, wherein the refrigerant circuit (1) has at least two evaporative heat exchangers (4, 6,38), **characterized in that** a separate expansion valve (45, 49) is, in each case, assigned to each evaporative heat exchanger (4,6, 38) and at least one of the expansion valves (45, 49) is designed such that its delivery capacity can be regulated for regulating the refrigerant temperature before the condenser unit (8).

2. The heat pump according to Claim 1,
**characterized in that** an evaporative heat exchanger (6, 38) connects one of the heat sources (12, 39) directly and the other evaporative heat exchanger(s) (4) connect(s) the remaining heat sources (12, 18, 39) indirectly to the refrigerant circuit (1).

3. The heat pump according to Claim 2,
**characterized in that** the remaining heat source circuits (12, 18, 39) can be coupled jointly or individually into the refrigerant circuit (1).

4. The heat pump according to Claim 3,
**characterized in that** at least one remaining heat source circuit (12, 18, 39) has a higher temperature compared to the optimum entry temperature at the refrigerant circuit (1).

5. The heat pump according to Claim 4,
**characterized in that** the remaining heat source circuit (18) with the highest temperature is a solar heat circuit.

6. The heat pump according to Claim 4,
**characterized in that** the remaining heat source circuit with the highest temperature (18) can be connected to an excessive heat circuit (24) which is directly connected to the heat distribution circuit (3) or to an external consumer in order to carry away excessive heat.

7. The heat pump according to Claim 6,
**characterized in that** the remaining heat source circuit with the highest temperature (18) has a feed pump (20) which is designed to feed solar heat into the refrigerant circuit (1) for a regulated and/or pulsed operation.

8. The heat pump according to Claim 4,
**characterized in that** at least two heat circuits (12, 18, 39) are assigned to the first evaporative heat exchanger (4) and a controllable flow mixer, through which the heat circuits (12, 18, 39) flow, is located before the first evaporative heat exchanger (4).

9. The heat pump according to Claim 8,
**characterized in that** the controllable flow mixer is configured such that it guides the heat circuits (13, 14) past one another, connects them to one another in series or mixes them with one another.

10. The heat pump according to Claim 9,
**characterized in that** the controllable flow mixer is configured such that, in the mixing position, it divides the fluid flows of the heat circuits into two partial flows in each case, wherein the first partial flows in each case form a new fluid flow which is guided to the first evaporative heat exchanger (4), and the second partial flows in each case form a new fluid flow which is returned to the heat exchanger (21) having a higher temperature.

11. The heat pump according to Claim 10,
**characterized in that** the controllable flow mixer is a 4-way mixer (51).

12. The heat pump according to Claim 11,
**characterized in that** the function of the controllable flow mixer is determined by the current source entry temperature which is measured by a temperature probe which is located before the first evaporative heat exchanger (4).

13. The heat pump according to Claim 12,
**characterized in that** a bypass pipe (52) is provided before the flow mixer, which bypasses the controllable flow mixer and in which a pressure-regulated overflow valve (53) is located.

14. A method for regulating the source entry temperature at a heat pump, consisting of a refrigerant circuit (1), a heat distribution circuit (3) and a heat source circuit (2) with more than one heat source, which is operated with at least two heat circuits (18, 39) arranged in parallel and having different temperatures,
**characterized in that** the at least two heat circuits (18, 39) are combined for the purposes of temperature equalization before an evaporative heat exchanger (4) and are mixed in terms of quantity, and the refrigerant circuit (1) has at least two evaporative heat exchangers (4, 6, 38), wherein a separate expansion valve (45, 49) is, in each case, assigned to each evaporative heat exchanger (4, 6, 38) and at least one of the expansion valves (45, 49) is regulated in its delivery capacity for regulating the refrigerant temperature before the condenser unit (8).

15. The method according to Claim 14,
**characterized in that** each of the fluid flows of the at least two heat circuits (18, 39) is divided into two partial flows and each first partial flow of each fluid flow is combined to form a first new fluid flow and each second partial flow of each fluid flow is combined to form a second new fluid flow, wherein the first of the new fluid flows is conducted through the evaporative heat exchanger (4).

16. The method according to Claim 15,
**characterized in that** the proportion of the first partial flows in each case, which are combined to form the first new fluid flow and guided to the evaporative heat exchanger, (4) is determined by the temperature conditions between the measured and the optimum source entry temperature at the evaporative heat exchanger (4), on the one hand, and the temperature offers of the two fluid flows, on the other hand.

17. The method according to Claim 14, wherein one of the two heat circuits (18, 39) is a solar heat circuit (18),
**characterized in that** the solar power is fed directly into the evaporative heat exchanger (4) of the heat pump without intermediate storage.

## Revendications

1. Pompe à chaleur, composée d'un circuit de réfrigérant (1), d'un circuit de répartiteur de chaleur (3) et d'un circuit de sources de chaleur (2) avec plus d'une source de chaleur, le circuit de réfrigérant (1) possédant au moins deux échangeurs de chaleur (4, 6, 38) à évaporation, **caractérisée en ce qu**'une vanne de détente (45, 49) séparée est affectée respectivement à chaque échangeur de chaleur (4, 6, 38) à évaporation et en ce que, pour la régulation de la température du réfrigérant en amont de l'unité de compresseur (8), la capacité de refoulement d'au moins une des vannes de détente (45, 49) peut être réglée.

2. Pompe à chaleur selon la revendication 1,
**caractérisée en ce qu**'un échangeur de chaleur (6, 38) à évaporation raccorde directement une des sources de chaleur (12, 39) au circuit de réfrigérant (1) et en ce que le ou les autres échangeurs de chaleur (4) à évaporation raccorde/raccordent indirectement les sources de chaleur (12, 18, 39) restantes au circuit de réfrigérant (1).

3. Pompe à chaleur selon la revendication 2,
**caractérisée en ce que** les circuits de sources de chaleur (12,18, 39) restants peuvent être couplés en commun ou individuellement dans le circuit de réfrigérant (1).

4. Pompe à chaleur selon la revendication 3,
**caractérisée en ce qu**'au moins un circuit de sources de chaleur (12, 18, 39) restant possède une température plus élevée par rapport à la température d'entrée optimale sur le circuit de réfrigérant (1).

5. Pompe à chaleur selon la revendication 4,
**caractérisée en ce que** le circuit de sources de chaleur (18) restant avec la température la plus élevée est un circuit de chaleur solaire.

6. Pompe à chaleur selon la revendication 4,
**caractérisée en ce que** le circuit de sources de chaleur restant avec la température la plus élevée (18) peut être raccordé à un circuit d'excédent de chaleur (24) qui est raccordé directement au circuit de répartiteur de chaleur (3) ou à un consommateur externe pour l'évacuation de l'excédent de chaleur.

7. Pompe à chaleur selon la revendication 6,
**caractérisée en ce que** le circuit de sources de chaleur restant avec la température la plus élevée (18) possède une pompe d'alimentation qui est conçue pour un fonctionnement régulé et/ou pulsé en vue de l'alimentation de la chaleur solaire dans le circuit de réfrigérant (1).

8. Pompe à chaleur selon la revendication 4,
**caractérisée en ce qu**'au moins deux circuits sources de chaleur (12, 18, 39) sont affectés au premier échangeur de chaleur (4) à évaporation et en ce qu'un mélangeur d'écoulement commandé est situé en amont de l'échangeur de chaleur (4) à évaporation et est parcouru par les circuits de chaleur (12, 18, 39).

9. Pompe à chaleur selon la revendication 8,
**caractérisée en ce que** le mélangeur d'écoulement commandé est constitué de telle sorte qu'il fait passer les circuits de chaleur (13, 14) les uns à côté des autres, les raccorde les uns aux autres en série ou les mélange les uns avec les autres.

10. Pompe à chaleur selon la revendication 9,
**caractérisée en ce que** le mélangeur d'écoulement commandé est constitué de telle sorte que, dans la position de mélange, il divise les flux de liquide des circuits de chaleur en respectivement deux flux partiels, les premiers flux partiels respectifs formant un nouveau flux de liquide qui est guidé vers le premier échangeur de chaleur (4) à évaporation, et les deuxièmes flux partiels respectifs formant un nouveau flux de liquide qui sont renvoyés vers l'échangeur de chaleur (21) tempéré de façon plus élevée.

11. Pompe à chaleur selon la revendication 10,
**caractérisée en ce que** le mélangeur d'écoulement commandé est un mélangeur 4 voies (51).

12. Pompe à chaleur selon la revendication 11,
**caractérisée en ce que** la fonction du mélangeur d'écoulement commandé est déterminée par la température actuelle d'entrée de sources qui est mesurée par une sonde de température qui est située en amont du premier échangeur de chaleur (4) à évaporation.

13. Pompe à chaleur selon la revendication 12,
**caractérisée en ce que,** en amont du mélangeur d'écoulement, il est prévu une conduite de contournement (52) qui contourne le mélangeur d'écoulement commandé et dans laquelle est située une soupape de trop-plein (53) régulée en pression.

14. Procédé de régulation de la température d'entrée de sources sur une pompe à chaleur, composée d'un circuit de réfrigérant (1), d'un circuit de répartiteur de chaleur (3) et d'un circuit de sources de chaleur (2) avec plus d'une source de chaleur, qui fonctionne avec au moins deux circuits de chaleur (18, 39) disposés en parallèle et présentant deux températures différentes, **caractérisé en ce que** les au moins deux circuits de chaleur (18, 39) sont réunis en amont d'un échangeur de chaleur (4) à évaporation et sont mélangés selon la quantité à des fins d'équilibrage de température, et le circuit de réfrigérant (1) possède au moins deux échangeurs de chaleur (4, 6, 38) à évaporation, une vanne de détente (45, 49) séparée étant affectée respectivement à chaque échangeur de chaleur (4, 6, 38) à évaporation, et la capacité de refoulement d'au moins une des vannes de détente (45, 9) pouvant être réglée pour la régulation de la température du réfrigérant en amont de l'unité de compresseur (8).

15. Procédé selon la revendication 14,
**caractérisé en ce que** chacun des flux de liquide des au moins deux circuits de chaleur (18, 39) est réparti en deux flux partiels et chaque premier flux partiel de chaque flux de liquide est conduit à un premier nouveau flux de liquide et chaque deuxième flux partiel de chaque flux de liquide est conduit à un deuxième nouveau flux de liquide, cela de façon conjointe, le premier des nouveaux flux de liquide étant conduit à travers l'échangeur de chaleur (4) à évaporation.

16. Procédé selon la revendication 15,
**caractérisé en ce que** le rapport de quantité des respectivement premiers flux partiels qui sont conduits conjointement au premier nouveau flux partiel et à l'échangeur de chaleur (4) à évaporation est déterminé d'une part par les rapports de température entre la température d'entrée de sources mesurée et la température d'entrée de sources optimale sur l'échangeur de chaleur (4) à évaporation et est déterminé d'autre part par les offres de température des deux flux de liquide.

17. Procédé selon la revendication 14, un des deux circuits de chaleur (18, 39) étant un circuit de chaleur solaire (18),
**caractérisé en ce que** l'énergie solaire est introduite sans stockage intermédiaire directement dans l'échangeur de chaleur (4) à évaporation de la pompe à chaleur.
